# EUROPÄISCHE PATENTSCHRIFT

(11) **EP 1 771 313 B1**
(45) Veröffentlichungstag und Bekanntmachung des Hinweises auf die Patenterteilung: **05.03.2008**
(21) Anmeldenummer: 05754449.6
(22) Anmeldetag: 21.06.2005
(51) Int. Cl.: B60K 23/04

(54) **VERFAHREN ZUR AUTOMATISCHEN BETÄTIGUNG VON QUERSPERREN BEI FAHRZEUGEN, INSBESONDERE BEI ARBEITSMASCHINEN UND EINSATZFAHRZEUGEN**
METHOD FOR AUTOMATICALLY ACTUATING INTERWHEEL DIFFERENTIAL LOCKS IN VEHICLES, PARTICULARLY IN MOBILE MACHINERY AND EMERGENCY VEHICLES
PROCEDE D'ACTIONNEMENT AUTOMATIQUE DES VERROUILLAGES TRANSVERSAUX DE VEHICULES, NOTAMMENT DE MACHINES ET DE VEHICULES PRIORITAIRES

(30) Priorität: 30.07.2004 DE 102004037195
(43) Veröffentlichungstag der Anmeldung: 11.04.2007
(73) Patentinhaber: ZF FRIEDRICHSHAFEN Aktiengesellschaft, 88038 Friedrichshafen (DE)
(72) Erfinder: BURKHART, Hugo, 88213 Ravensburg (DE); AUMANN, Bernd, 88279 Amtzell (DE); HILLER, Udo, 88074 Meckenbeuren (DE)
(86) Internationale Anmeldenummer: PCT/EP2005/006667
(87) Internationale Veröffentlichungsnummer: WO 2006/012945

(56) Entgegenhaltungen:
- EP-A- 0 424 932
- WO-A-99/32805
- DE-A1- 4 221 045
- FR-A- 2 638 401
- US-A- 5 451 188
- US-A- 6 085 138

## Beschreibung

Die vorliegende Erfindung bezieht sich auf ein Verfahren zur automatischen Betätigung von Quersperren bei Fahrzeugen, insbesondere bei Arbeitsmaschinen und Einsatzfahrzeugen, gemäß dem Oberbegriff des Patentanspruchs 1.

Herkömmliche knickgelenkte Baumaschinen, beispielsweise Muldenkipper bzw, radgelenkte Ackerschlepper, Bau- oder Spezialmaschinen sind mit Lastschaltgetrieben, umfassend Drehmomentwandler bzw. Strömungskupplungen ausgerüstet. Im Getriebeabtrieb ist üblicherweise bei Muldenkippern und Ackerschleppern ein Zwischenachsdifferential eingebaut, welches ungesperrt eine Drehmomentverteilung zwischen Vorder- und Hinterachsen zulässt und gesperrt einen direkten Durchtrieb realisiert. Des weiteren ist in den Achsen des Fahrzeugs je ein Querdifferential eingebaut.

Differentiale von allradgetriebenen Fahrzeugen werden über Sperrkupplungen (Differentialsperren) aktiviert, wobei diese Sperrkupplungen automatisch oder manuell anhand von Fahrparametern des Fahrzeuges zum Sperren des Differentials eingerückt bzw. zum Öffnen oder Ausschalten der Differentialsperre ausgerückt werden.

Das Zuschalten von lastschaltbaren Differenzialsperren, die beispielsweise als hydraulisch betätigte Lamellenkupplungen ausgebildet sein können, kann durch Schlupfkontrolle, d.h. durch Vergleich der Räderdrehzahlen automatisiert werden.

Aus der DE 197 49 919 A1 ist ein solches Verfahren bekannt. Hierbei werden im Rahmen einer Schlupfkontrolle die Drehzahlen der beiden Ausgangswellen des Differential miteinander verglichen, wobei aus diesem Vergleich Schlupfsignale gebildet werden, die, sobald sie einen Schwellenwert überschreiten, das Einrücken der Sperrkupplung des jeweiligen Differentials unter Berücksichtigung des Lenkwinkels einleiten. Ein weiteres Verfahren, im Rahmen dessen die Räderdrehzahlen ermittelt werden, ist Gegenstand der DE 197 48 086 A1.

Aus der EP 0 424 932 B1 ist bekannt, zum Ausschalten der Differentialsperre, d.h. zum Ausrücken der Sperrkupplung, das Verhältnis der an zwei Getriebewellen auftretenden Drehmomente als Kennwert zu verwenden und diesen laufend ermittelten Ist-Kennwert mit einem durch die Getriebeübersetzung bestimmten Momentenverhältnis als Soll-Kennwert zu vergleichen. Aufgrund dieses Vergleichs wird eine weitere Stellvorrichtung zur Änderung der Drehmomentbelastung des An- und/oder Abtriebsstranges in Abhängigkeit von der Abweichung verwendet. Mit dieser Stellvorrichtung werden die für das Lösen der Sperrkupplung erforderlichen Schaltbedingungen erfüllt, so dass nach Erreichen dieser Schaltbedingung die Sperrkupplung ausgerückt und damit die Differentialsperre geöffnet bzw. ausgeschaltet wird.

Aus der EP 0 410 441 A2 ist ein Ausgleichsgetriebe für Kraftfahrzeuge bekannt, bei dem aufgrund von Fahrparametern eine Differentialsperre ein- und ausschaltbar ist. Für das Schalten der Differentialsperre werden Betriebsdaten des Kraftfahrzeugs einem Steuergerät zugeführt, und zwar insbesondere Drehzahlen von mindestens zwei Antriebswellen. Um das Ausschalten der Differentialsperren zu ermöglichen, ohne nach einer Sperre - wie oben erwähnt - die zugehörige Sperrkupplung zur Messung von Drehzahldifferenzen immer wieder lösen zu müssen, wird dort vorgeschlagen, an den Wellen Sensoren zur laufenden Drehmomenterfassung anzuordnen. In einem Steuergerät sind Zustandsgrößen gespeichert, insbesondere ein der Stellung des Gashebels zugeordneter Wert und ein dem gewählten Getriebegang des Fahrzeugs zugeordneter Drehmomentwert sowie ferner das Verhältnis zweier Drehmomente zum Ausschalten der Differentialsperre. Durch Vergleich dieser gespeicherten Werte mit den aktuellen Werten kann das Ein- und Ausschalten der Differentialsperre den jeweiligen Fahrzuständen des Fahrzeugs besser angepasst werden.

Aus der US-A-6 085 138 ist ein Verfahren mit den Merkmalen des Oberbegriffs des Anspruchs 1 bekannt.

Die Drehzahlmessung an den Rädern ist aufgrund der geringen auftretenden Drehzahlen bei Arbeitsmaschinen und Einsatzfahrzeugen aufwändig und zudem wegen der exponierten Lage und der harten Einsatzbedingungen, potenziell unzuverlässig.

Die Implementierung des Verfahrens zur automatischen Betätigung von Differentialsperren nach dem Stand der Technik erweist sich in nachteiliger Weise, auch wegen der benötigten Sensorik, als technisch aufwändig und kostenintensiv, insbesondere für die Anwendung bei Arbeitsmaschinen und Einsatzfahrzeugen, da in diesen Einsatzfällen besondere Belastungen, insbesondere für die Sensoren auftreten. Des weiteren wirkt sich die Verwendung von Selbstsperrdifferentialen negativ auf den Kraftstoffverbrauch und Reifenverschleiß aus.

Der vorliegenden Erfindung liegt die Aufgabe zugrunde, ein Verfahren zur automatischen Betätigung von Quersperren bei Fahrzeugen, insbesondere bei Arbeitsmaschinen und Einsatzfahrzeugen, anzugeben, das zu dessen Durchführung bereits vorhandene Parameter benötigt und den Fahrzustand des Fahrzeuges gerade in kritischen Situationen nicht ungünstig beeinflusst. Des weiteren soll das erfindungsgemäße Verfahren keine zusätzliche Sensorik benötigen.

Diese Aufgabe wird gemäß der Erfindung durch die Merkmale des Patentanspruchs 1 gelöst. Weitere Ausgestaltungen und Vorteile gehen aus den Unteransprüchen hervor.

Demnach wird vorgeschlagen, dass die Quersperren zugeschaltet werden, wenn die Fahrzeuggeschwindigkeit einen vorgegebenen Schwellenwert v_1 unterschreitet und das Getriebeabtriebsmoment einen vorgegebenen Schwellenwert T_Ab1 überschreitet und dass die eingelegten Quersperren beim Überschreiten eines weiteren vorgegebenen Schwellenwertes v_2 oder beim Unterschreiten eines weiteren Schwellenwertes T_Ab2 für das Getriebeabtriebsmoment geöffnet werden, wobei v_2 größer als v_1 und T_Ab2 kleiner als T_Ab1 ist.

Hierbei liegt dem erfindungsgemäßen Verfahren die Überlegung zugrunde, dass diese Bedingungen ausreichen, um einen Sperrbedarf der Querdifferentiale im Arbeitseinsatz zu erkennen, und dass die Quersperren nur in Fahrsituationen eingelegt werden, bei denen das Fahrverhalten des Fahrzeugs nicht merklich beeinträchtigt wird: Wenn nämlich das Getriebeabtriebsmoment hoch und die Fahrzeuggeschwindigkeit gering ist, ist die Wahrscheinlichkeit hoch, dass ein Rad durchrutscht. Wenn das Getriebeabtriebsmoment gering ist oder, wenn die Fahrzeuggeschwindigkeit hoch ist, ist die Gefahr, dass ein Rad durchrutscht, gering. Durch das erfindungsgemäße Öffnen der Sperren bei hohen Geschwindigkeiten werden zudem fahrkritische Situationen vermieden.

Durch die erfindungsgemäße Konzeption wird gewährleistet, dass die Quersperren immer dann offen sind, wenn Fahrsituationen auftreten, bei denen die Sperrwirkung sicher nicht benötigt wird, wobei in allen anderen Situationen die Quersperren geschlossen sind. Auf diese Weise entfällt die nach dem Stand der Technik benötigte Sensorik zum Erkennen der Notwendigkeit einer Sperre.

Der als Parameter benötigte Wert des Getriebeabtriebsmomentes kann in vorteilhafter Weise über den eingelegten Gang und das Getriebeeingangsmoment, z. B. ermittelt über die Differenzdrehzahl des hydrodynamischen Wandlers, ermittelt werden.

Um zu gewährleisten, dass die Quersperren nicht in Fahrsituationen aktiviert werden, bei denen sich das Fehlen der Differentialwirkung negativ auf das Fahrverhalten auswirkt, kann der Schwellenwert des Getriebeabtriebsmomentes T_Ab1 entsprechend hoch eingestellt werden.

Im Rahmen einer besonders vorteilhaften Variante des erfindungsgemäßen Verfahrens wird vorgeschlagen, dass der Schwellenwert des Getriebeabtriebsmomentes T_Ab1 vom Fahrer mittels einer geeigneten Einrichtung, beispielsweise eines Drehpotentiometers im Armaturenbrett entsprechend den Fahrzeugeinsatzbedingungen eingestellt werden kann. Dadurch kann in Abhängigkeit vom Arbeitseinsatz, vom Wetter, von der Fahrbahnbeschaffenheit etc. der Schwellenwert T_Ab1 für das Getriebeabtriebsmoment angepasst werden. Auf diese Weise kann der Fahrer den Schwellenwert bei schmierigem Untergrund derart einstellen, dass die Quersperren bei einem kleinen Drehmoment geschlossen werden; bei griffigem Untergrund können durch eine entsprechende Einstellung die Quersperren erst bei höherem Drehmoment geschlossen werden. Da sich diese Parameter im Allgemeinen während eines typischen Arbeitseinsatzes nur selten ändern, sind manuelle Eingriffe nicht bzw. nur selten notwendig.

Gemäß der Erfindung ist vorgesehen, dass eine Änderung des Wertes des Schwellenwertes des Getriebeabtriebsmomentes T_Ab1 auch in einer Änderung des Schwellenwertes des Getriebeabtriebsmomentes T_Ab2 resultiert. Dies kann beispielsweise über einen in der Steuerung abgelegten Algorithmus oder eine Kennlinie erfolgen.

Beispielsweise können für den Fall, dass ein Potentiometer zur Einstellung des Schwellenwertes T_Ab1 verwendet wird, folgende Funktionalitäten in Abhängigkeit von der Potentiometererstellung realisiert werden:
Endanschlag 1: Quersperren werden nie geschlossen;
Endanschlag 2: Quersperren werden manuell zugeschaltet; und
Bereich zwischen Endanschlag 1 und Endanschlag 2: Stufenlose Einstellung des Schwellenwertes T_Ab1.

Durch diese Ausgestaltung sind weitere Eingriffe des Fahrers nicht notwendig, derart, dass der üblicherweise im Fahrzeug vorgesehene Fußschalter für die manuelle Sperrenzuschaltung entfallen kann. In vorteilhafter Weise werden zur Durchführung des Verfahrens keine zusätzlichen Sensoren benötigt, da als Drehzahlsensor der bereits vorhandene Sensor im Getriebeabtrieb verwendet wird. Des weiteren kann bei der Ansteuerung der Quersperren in einem knickgelenkten Radlader mit starrem Durchtrieb zwischen Vorder- und Hinterachse der Lenkwinkelgeber entfallen.

Gemäß der Erfindung kann auch vorgesehen sein, dass der Schwellenwert für die Fahrzeuggeschwindigkeit v_1 vom Fahrer eingestellt werden kann.

Das erfindungsgemäße Verfahren ist insbesondere für Arbeitsmaschinen und Einsatzfahrzeuge geeignet, beispielsweise Radlader, deren Einsatz im Arbeitsspiel den Einsatz der Transportfahrt übersteigt.

## Patentansprüche

1. Verfahren zur automatischen Betätigung von Quersperren bei Fahrzeugen, insbesondere bei Arbeitsmaschinen und Einsatzfahrzeugen, wobei die Quersperren immer dann geschlossen sind, wenn Fahrsituationen auftreten, bei denen die Ausgleichswirkung des Differenzials sicher nicht benötigt wird, wobei in den Situationen die Quersperren offen sind, in welchen eine geschlossene Quersperre die Fahreigenschaft negativ beeinflusst, **dadurch gekennzeichnet, dass** die Quersperren zugeschaltet werden, wenn die Fahrzeuggeschwindigkeit einen vorgegebenen Schwellenwert v_1 unterschreitet und das Getriebeabtriebsmoment einen vorgegebenen Schwellenwert T_Ab1 überschreitet, und dass die eingelegten Quersperren geöffnet werden, wenn ein weiterer vorgegebener Schwellenwert v_2 von der Fahrgeschwindigkeit überschritten wird, oder ein weiterer Schwellenwert T_Ab2 vom Getriebeabtriebsmoment unterschritten wird, wobei der Schwellenwert v_2 größer als der Schwellenwert v_1 und der Schwellenwert T_Ab2 kleiner als der Schwellenwert T_Ab1 ist.

2. Verfahren zur automatischen Betätigung von Quersperren nach Anspruch 1, **dadurch gekennzeichnet, dass** der Schwellenwert des Getriebeabtriebsmomentes T_Ab1 vom Fahrer einstellbar ist.

3. Verfahren zur automatischen Betätigung von Quersperren nach Anspruch 2, **dadurch gekennzeichnet, dass** eine Änderung des Wertes des Schwellenwertes des Getriebeabtriebsmomentes T_Ab1 in einer Änderung des Schwellenwertes des Getriebeabtriebsmomentes T_Ab2 resultiert, was über einen in der Steuerung abgelegten Algorithmus oder eine Kennlinie erfolgt.

4. Verfahren zur automatischen Betätigung von Quersperren nach Anspruch 2 oder 3, **dadurch gekennzeichnet, dass** zur Einstellung des Schwellenwertes T_Ab1 ein Potentiometer verwendet wird, wobei folgende Funktionalitäten in Abhängigkeit von der Potentiometererstellung realisiert werden:
Endanschlag 1:
Quersperren werden nie geschlossen;
Endanschlag 2:
Quersperren werden manuell zugeschaltet und
Bereich zwischen Endanschlag 1 und Endanschlag 2:
Stufenlose Einstellung des Schwellenwertes T_Ab1.

## Claims

1. Method for automatically actuating axle differential locks in vehicles, in particular in industrial machines and operational vehicles, wherein the axle differential locks are always closed when driving situations occur in which the differential action of the differential is definitely not required, wherein the axle differential locks are open in the situations in which a closed axle differential lock has a negative influence on the driving quality, **characterised in that** the axle differential locks are connected when the vehicle speed falls below a predetermined threshold value v_1 and the transmission output torque exceeds a predetermined threshold value T_Ab1, and that the engaged axle differential locks are opened when a further predetermined threshold value v_2 of the vehicle speed is exceeded or the transmission output torque falls below a further threshold value T_Ab2, wherein the threshold value v_2 is greater than the threshold value v_1 and T-Ab2 is smaller than the threshold value T_Ab1.

2. Method for automatically actuating axle differential locks according to Claim 1, **characterised in that** the threshold value of the transmission output torque T_Ab1 can be set by the driver.

3. Method for automatically actuating axle differential locks according to Claim 2, **characterised in that** a change in the value of the threshold value of the transmission output torque T_Ab1 results in a change in the threshold value of the transmission output torque T_Ab2, which can Lake place through an algorithm or a characteristic stored in the control unit.

4. Method for automatically actuating axle differential locks according to Claim 2 or 3, **characterised in that** a potentiometer is used to set the threshold value T_Ab1, wherein the following functionalities are implemented in accordance with the potentiometer setting:
End stop 1:
axle differential locks are never closed;
End stop 2:
axle differential locks are manually connected and
Region between end stop 1 and end stop 2: continuous adjustment of the threshold value T_Ab1.

## Revendications

1. Procédé pour l'actionnement automatique de blocages transversaux dans des véhicules, en particulier dans des engins de chantier et véhicules spéciaux, dans lequel les blocages transversaux sont toujours fermés lorsqu'il se présente des situations de conduite dans lesquelles on est certain de ne pas avoir besoin de l'effet de compensation du différentiel, dans lequel les blocages transversaux sont ouverts dans des situations dans lesquelles un blocage transversal fermé a une influence négative sur la tenue de route, **caractérisé en ce que** les blocages transversaux sont mis en action lorsque la vitesse du véhicule franchit un seuil prédéterminé v_1 dans le sens croissant et que le couple de sortie de la transmission franchit un seuil prédéterminé T_Ab1 dans le sens décroissant, et **en ce que** les blocages transversaux enclenchés sont ouverts lorsqu'un autre seuil prédéterminé v_2 est franchi dans le sens croissant par la vitesse du véhicule ou qu'un autre seuil T_Ab2 est franchi dans le sens décroissant par le couple de sortie de la transmission, le seuil v_2 étant plus grand que le seuil v_1 et le seuil T_Ab2 étant plus petit que le seuil T_Ab1.

2. Procédé pour l'actionnement automatique de blocages transversaux selon la revendication 1, **caractérisé en ce que** le seuil du couple de sortie de transmission T_Ab1 peut être réglé par le conducteur.

3. Procédé pour l'actionnement automatique de blocages transversaux selon la revendication 2, **caractérisé en ce qu**'une modification de la valeur du seuil du couple de sortie de la transmission T_Ab1 entraîne une modification du seuil du couple de sortie de la transmission T_Ab2. ce qui se produit par l'intermédiaire d'un algorithme enregistré dans la commande, ou d'une courbe caractéristique.

4. Procédé pour l'actionnement automatique de blocages transversaux selon la revendication 2 ou 3, **caractérisé en ce que**, pour le réglage du seuil T_Ab1, on utilise un potentiomètre, les fonctionnalités suivantes étant réalisées en fonction de la position du potentiomètre:
Butée de fin de course 1:
Les blocages transversaux ne sont jamais fermés;
Butée de fin de course 2 :
Les blocages transversaux sont mis en action manuellement et
Zone entre la butée de fin de course 1 et la butée de fin de course 2 Réglage du seuil T_Ab1 sans paliers.
